# EUROPEAN PATENT APPLICATION

(11) **EP 4 757 124 A1**
(43) Date of publication of application: **10.06.2026**
(21) Application number: 24862468.6
(22) Date of filing: 30.07.2024
(51) Int. Cl.: H02K 1/18, H02K 1/16

(54) **MOTOR STATOR AND MOTOR**

(30) Priority: 04.09.2023 JP 2023142675
(71) Applicant: Jatco Ltd., Shizuoka 417-8585 (JP)
(72) Inventor: SEKINE, Yu, Fuji-shi, Shizuoka 417-8585 (JP); SUWABAYASHI, Akira, Fuji-shi, Shizuoka 417-8585 (JP); SHOICHI, Minoru, Fuji-shi, Shizuoka 417-8585 (JP); TANAKA, Daiki, Fuji-shi, Shizuoka 417-8585 (JP)
(74) Representative: Hoefer & Partner Patentanwälte mbB
(86) International application number: PCT/JP2024/027131
(87) International publication number: WO 2025/052814

(57) **Abstract**

[Problems] An object is to improve a bonding strength of a motor core.

[Solutions] In the stator 1 having the laminated core 10, the laminated core 10 includes: the plurality of first core sheet layers 20; the plurality of second core sheet layers 30 provided so as to be alternately laminated with the first core sheet layers 20; and the adhesive material 40 for adhering the first core sheet layers 20 and the second core sheet layers 30, each of the plurality of first core sheet layers 20 has the offset portion 25, the offset portion 25 being configured so as not to overlap with the second core sheet layers 30 in the axial direction, and the adhesive material 40 adheres the offset portions 25 facing each other in the axial direction.

## Description

### TECHNICAL FIELD

The present invention relates to a motor stator and a motor.

### BACKGROUND ART

Patent Document 1 discloses a stator core (a motor stator) that includes first core sheets located at both ends and second core sheets that are provided between the first core sheets, each of the second core sheets having an arc-shaped groove forming a recessed portion at an end portion on the inner circumferential surface side. In the stator core, the first core sheets and the second core sheets are adhered and fixed by an adhesive material that is applied to each of the recessed portions.

### PRIOR ART DOCUMENT

### PATENT DOCUMENT

Patent Document 1: JP 2012-120299 A

### SUMMARY OF INVENTION

### PROBLEMS TO BE SOLVED BY THE INVENTION

However, in the stator core described in Patent Document 1, because a pair of first core sheets are adhered together by the adhesive applied to the grooves formed in the second core sheets, areas adhered by the adhesive in the first core sheets are small. Accordingly, there is a concern that a bonding strength of a laminated core 210 may become small.

The present invention has been conceived in light of the problems mentioned above, and an object thereof is to improve a bonding strength of a motor core.

### MEANS FOR SOLVING THE PROBLEM

According to one aspect of the present invention, in a motor stator having a laminated core, the laminated core includes: a plurality of first core sheet layers; a plurality of second core sheet layers provided so as to be alternately laminated with the first core sheet layers; and an adhesive material for adhering the first core sheet layers and the second core sheet layers, each of the plurality of first core sheet layers has an offset portion, the offset portion being configured so as not to overlap with the second core sheet layers, and the adhesive material adheres the offset portions facing each other in the axial direction.

### EFFECT OF THE INVENTION

According to this aspect, the first core sheet layers having the offset portion and the second core sheet layers with which the offset portion does not overlap in the axial direction are alternately laminated, and the offset portions of the first core sheet layers are adhered with each other by the adhesive material. Thus, because the offset portions of the first core sheet layers that are alternately laminated with the second core sheet layers are adhered with each other by the adhesive material, it is possible to increase an area adhered by the adhesive material. Therefore, it is possible to improve the bonding strength of the motor core.

### BRIEF DESCRIPTION OF DRAWINGS

[FIG. 1] FIG. 1 is a configuration diagram of a motor to which an embodiment of the present invention is applicable.
[FIG. 2] FIG. 2 is an enlarged view of a main portion of a first core sheet in a laminated core of a motor stator according to a first embodiment of the present invention.
[FIG. 3] FIG. 3 is an enlarged view of a main portion of a second core sheet in the laminated core of the motor stator according to the first embodiment of the present invention.
[FIG. 4] FIG. 4 is a sectional view of a side surface of the laminated core in the motor stator according to the first embodiment of the present invention.
[FIG. 5] FIG. 5 is a configuration diagram showing a comparative example with respect to FIG. 4.
[FIG. 6] FIG. 6 is an enlarged view of a main portion of a second core sheet in the laminated core of the motor stator according to a second embodiment of the present invention.

### DESCRIPTION OF EMBODIMENTS

An embodiment of the present invention will be described below with reference to the drawings.

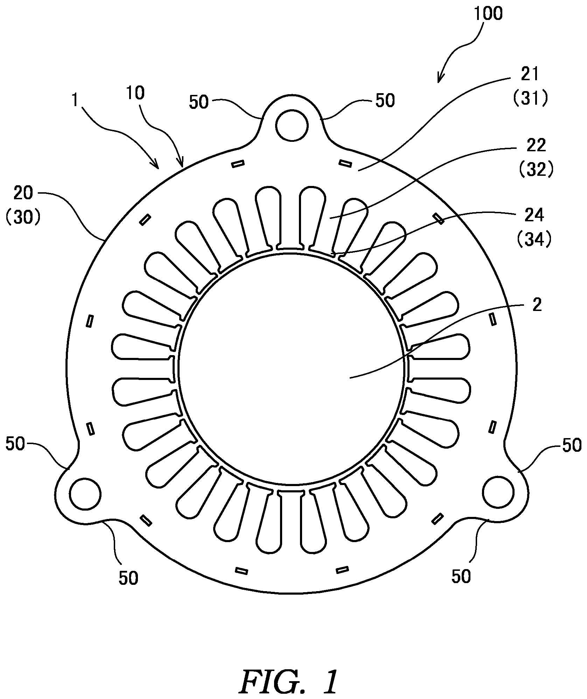

First, with reference to FIG. 1, a motor 100 to which an embodiment of the present invention is applicable will be described. FIG. 1 is a configuration diagram of the motor 100.

As shown in FIG. 1, the motor 100 includes a stator 1 serving as a motor stator and a rotor 2.

Hereinafter, the central axis direction of the stator 1 will be referred to as the "axial direction", the rotation direction of the rotor 2 in the stator 1 will be referred to as the "circumferential direction", and the direction extending radially from the central axis of the stator 1 will be referred to as the "radial direction".

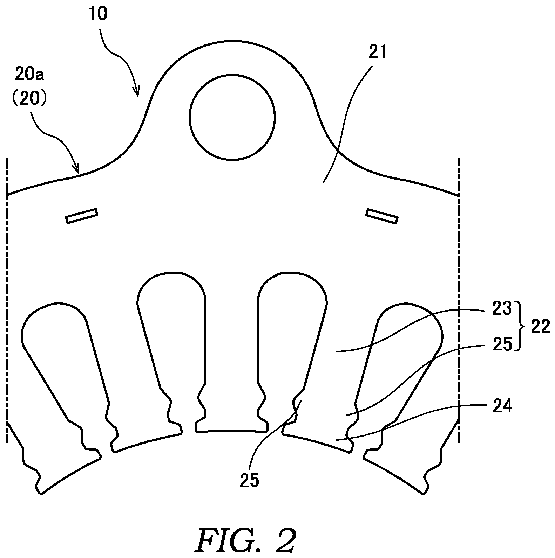

The stator 1 is a stator of the motor 100 and is formed in a substantially cylindrical shape. The stator 1 has a laminated core 10 and a wound wire (not shown). The laminated core 10 will be described below in detail with reference to FIGs. 2 to 6.

The rotor 2 is a rotor of the motor 100 and is formed in a substantially columnar shape extending in the axial direction. The rotor 2 is installed at the center of the stator 1.

Subsequently, the laminated core 10, 110 according to respective embodiments applicable to the stator 1 will be described.

### <First Embodiment>

The laminated core 10 of the stator 1 according to a first embodiment of the present invention will be described below with reference to FIGs. 2 to 4.

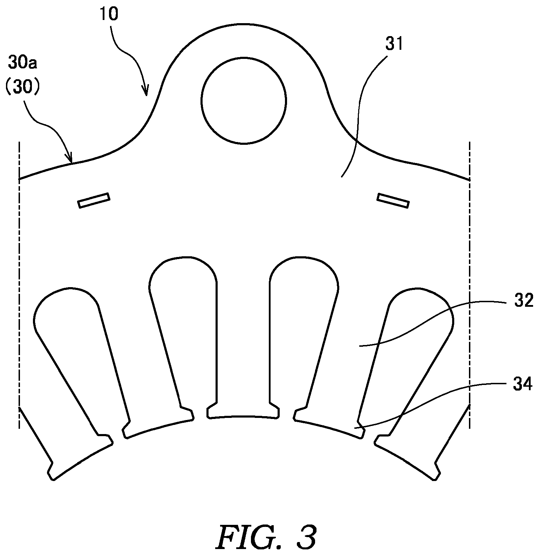

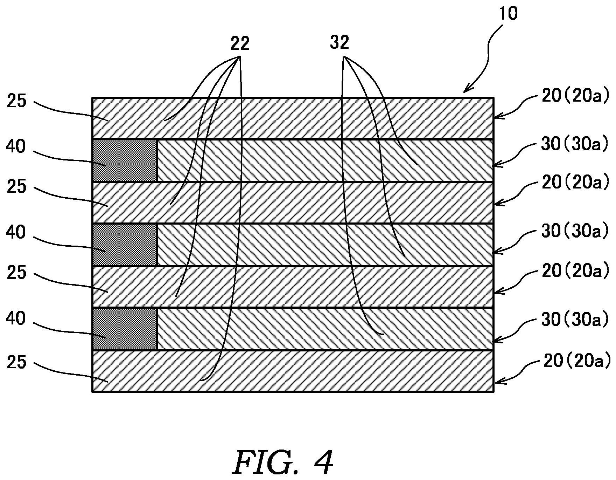

First, a configuration of the laminated core 10 will be described with reference to FIGs. 2 and 3. FIG. 2 is an enlarged view of a main portion of a first core sheet 20a in the laminated core 10. FIG. 3 is an enlarged view of a main portion of a second core sheet 30a in the laminated core 10. FIG. 4 is a sectional view of a side surface of the laminated core 10 in the stator 1.

The laminated core 10 includes a plurality of first core sheet layers 20, a plurality of second core sheet layers 30, adhesive materials 40, and welded portions 50.

Each of the first core sheet layers 20 has a single first core sheet 20a. Alternatively, each of the first core sheet layers 20 may have a plurality of first core sheets 20a. In other words, each of the first core sheet layers 20 has the single first core sheet 20a or the plurality of first core sheets 20a.

As shown in FIG. 2, each of the first core sheets 20a is a thin plate formed of an electromagnetic steel sheet formed into a substantially circular shape. In a state in which the first core sheet layers 20 and the second core sheet layers 30 are alternately laminated, the first core sheets 20a constitute the laminated core 10 having a cylindrical shape extending in the axial direction. Each of the first core sheets 20a has a first annular portion 21 serving as an annular portion, first extended portions 22 each serving as an extended portion, first remaining portions 23 each serving as a remaining portion, first teeth portions 24 each serving as a teeth portion, and offset portions 25.

The first annular portion 21 is formed in a substantially circular shape centered on the central axis of the stator 1.

Each of the first extended portions 22 extends from the first annular portion 21 toward the inner circumferential side in the radial direction. The first extended portions 22 are provided at equal intervals in the circumferential direction. The wound wire is wound around each of the first extended portions 22.

The first remaining portion 23 is a part of the first extended portion 22 that extends from the first annular portion 21 toward the inner circumferential side in the radial direction. The first remaining portion 23 is a portion of the first extended portion 22 excluding the offset portions 25, which will be described later.

The first teeth portion 24 is formed in a substantially T shape. The first teeth portion 24 projects from the first extended portion 22 toward the inner circumferential side in the radial direction. The first teeth portion 24 is formed with a greater length in the circumferential direction than the first remaining portion 23.

The offset portions 25 are protrusion portions that project from the first extended portion 22 to both sides in the circumferential direction. Each of the offset portions 25 has a smaller radial length than the first remaining portion 23 of the first extended portion 22. The offset portions 25 are provided at positions where a distance to the first teeth portion 24 is shorter than a distance to the first annular portion 21. In other words, the offset portions 25 are provided on the inner circumferential side with respect to the center of the first extended portion 22 in the radial direction. Here, the offset portions 25 are formed on the inner circumferential side in the radial direction with respect to the first remaining portion 23. In other words, the offset portions 25 are provided side by side with the first teeth portion 24 in the radial direction.

In this way, each of the first core sheets 20a is formed such that the first annular portion 21, the first remaining portion 23, the offset portions 25, and the first teeth portion 24 are arranged in this order from the outer side in the radial direction. Note that each of the first extended portions 22 is formed by combining the first remaining portion 23 and the offset portions 25.

With such a configuration, by providing the offset portions 25 so as to be shorter than the entire length of the first extended portion 22, it is possible to increase an area of the first remaining portion 23 in the first extended portion 22 as compared with a case in which the offset portions 25 are provided over the entire length of the first extended portion 22 in the radial direction. Accordingly, it is possible to improve a bonding strength of the laminated core 10 without reducing the area of the electromagnetic steel sheet of the laminated core 10.

Each of the second core sheet layers 30 has a portion that is laminated adjacently and alternately with the first core sheet layers 20. Each of the second core sheet layers 30 has a single second core sheet 30a. Alternatively, each of the second core sheet layers 30 may have a plurality of second core sheets 30a. In other words, each of the second core sheet layers 30 has a single second core sheet 30a or the plurality of second core sheets 30a.

As shown in FIG. 3, each of the second core sheets 30a is a thin plate formed of an electromagnetic steel sheet formed into a substantially circular shape. In a state in which the first core sheet layers 20 and the second core sheet layers 30 are alternately laminated, the second core sheets 30a constitute the laminated core 10 having a cylindrical shape extending in the axial direction. Each of the second core sheets 30a has a second annular portion 31 serving as the annular portion, a second extended portion 32 serving as the extended portion, and a second teeth portion 34 serving as the teeth portion.

The second annular portion 31 is formed in a substantially circular shape centered on the central axis of the stator 1. The second annular portion 31 overlaps in the axial direction with the first annular portions 21 of the first core sheets 20a and the second annular portions 31 of other second core sheets 30a.

Each of the second extended portions 32 extends from the second annular portion 31 toward the inner circumferential side in the radial direction. The second extended portions 32 are provided at equal intervals in the circumferential direction. The second extended portions 32 overlap in the axial direction with the first extended portions 22 of the first core sheets 20a and the second extended portions 32 of other second core sheets 30a. The wound wire is wound around each of the second extended portions 32 in a state in which the second extended portions 32 are laminated with the first extended portions 22.

The second teeth portion 34 has a substantially T shape and projects from the second extended portion 32 toward the inner side in the radial direction. The second teeth portion 34 overlaps in the axial direction with the first teeth portions 24 of the first core sheets 20a and the second teeth portions 34 of other second core sheets 30a.

The second core sheet layers 30 are alternately laminated with the first core sheet layers 20. At this time, the offset portions 25 provided in the first core sheet 20a project from the first extended portions 22 to both sides in the circumferential direction. Thus, even when the first core sheet layers 20 and the second core sheet layers 30 are alternately laminated, the offset portions 25 do not overlap with the second core sheet layers 30.

In a state in which the first core sheet layers 20 and the second core sheet layers 30 are alternately laminated, the first core sheet layers 20 respectively having the offset portions 25 face each other in the axial direction with the second core sheet layers 30 interposed therebetween.

However, the offset portions 25 do not have a portion that overlaps with the second core sheet layers 30 in the axial direction. Thus, gaps are formed between the offset portions 25 and the second core sheet layers 30.

As shown in FIG. 4, the first core sheet layers 20 and the second core sheet layers 30 are adhered by the adhesive materials 40. Specifically, the adhesive materials 40 are respectively applied to the gaps formed between the offset portions 25 and the second core sheet layers 30. By applying the adhesive materials 40 to the gaps formed by the offset portions 25, the offset portions 25 facing each other in the axial direction are adhered to each other. In addition, the adhesive materials 40 further adhere to surfaces of the second core sheet layers 30 on the cross direction side that intersects with the axial direction.

As shown in FIG. 1, the outer circumference of the laminated core 10 is joined by welding at the welded portions 50. Thereby, the outer circumference of the laminated core 10 is joined. Accordingly, the laminated core 10 is bonded/joined on both the inner circumferential side and the outer circumferential side. Therefore, it is possible to further improve the bonding strength of the laminated core 10. Note that the welded portions 50 may not be provided when a sufficient bonding strength can be secured only by the adhesive materials 40.

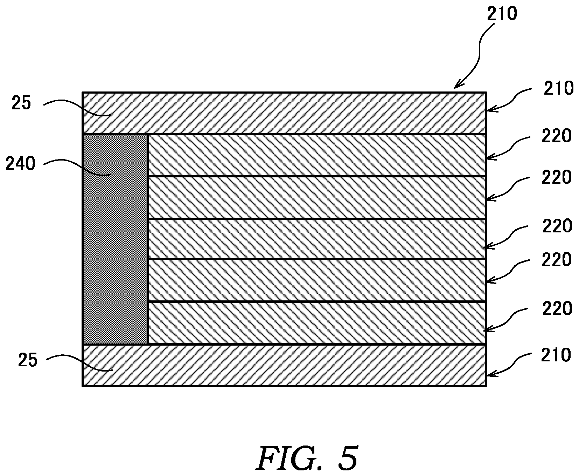

Next, with reference also to FIG. 5, an operation of the laminated core 10 according to this embodiment will be described. FIG. 5 is a sectional view of a side surface of a laminated core 210 according to a comparative example.

As shown in FIG. 5, the laminated core 210 includes a pair of first core sheet layers 220, a plurality of second core sheet layers 230 provided between the pair of first core sheet layers 220, and an adhesive material 240. Each of the first core sheet layers 220 has a configuration similar to that of the first core sheet layer 20 of this embodiment, and each of the second core sheet layers 230 has a configuration similar to that of the second core sheet layer 30 of this embodiment.

The adhesive material 240 adheres opposed surfaces of the offset portions 25 in the pair of first core sheet layers 220 in the axial direction with surfaces of the plurality of second core sheet layers 230 on the cross direction side that face the axial direction. In this case, because the offset portions 25 are provided only on the pair of first core sheet layers 220, the area that is adhered in the axial direction by the adhesive material 240 is small. Accordingly, there is a concern that the bonding strength of the laminated core 210 may become small.

In contrast, as shown in FIG. 4, in the laminated core 10 according to this embodiment, the first core sheet layers 20 respectively having the offset portions 25 and the second core sheet layers 30 with which the offset portions 25 do not overlap in the axial direction are alternately laminated, and the offset portions 25 of the first core sheet layers 20 are adhered to each other by the adhesive materials 40. Thus, because the offset portions 25 of the first core sheet layers 20, which are alternately laminated with the second core sheet layers 30, are adhered to each other by the adhesive materials 40, it is possible to increase the area adhered by the adhesive materials 40. Therefore, it is possible to improve the bonding strength of the laminated core 10.

In addition, the offset portions 25 are provided on the inner circumferential side in the radial direction with respect to the first remaining portion 23. With such a configuration, the adhesive materials 40 can bond the laminated core 10 at the further radially inward side. Thus, it is possible to suppress the inner circumferential side in the radial direction of the laminated core 10 from being peeled off. Therefore, it is possible to prevent the peeling from occurring on the inner circumferential side in the radial direction of the laminated core 10 and insert-ability of the wound wire from being deteriorated.

In addition, because the offset portions 25 are formed so as to project from the first extended portion 22 to both sides in the circumferential direction, it is possible to bond the inner circumferential side in the radial direction of the laminated core 10 without reducing the area of the electromagnetic steel sheet in the first core sheet layer 20. Thereby, it is possible to improve the bonding strength of the laminated core 10 without deteriorating the performance of the motor 100. In addition, because the offset portions 25 project from the first extended portion 22 to both sides in the circumferential direction, it is possible to increase the area of the electromagnetic steel sheet in the laminated core 10 and generate stronger magnetic force.

### <Second Embodiment>

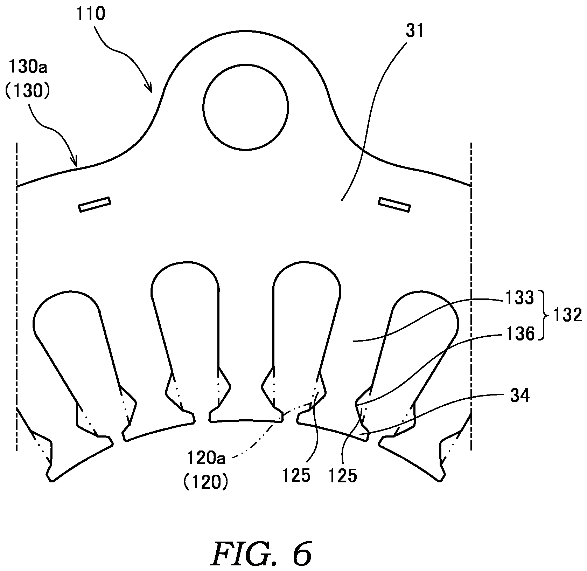

Next, with reference mainly to FIG. 6, a laminated core 110 according to a second embodiment will be described. FIG. 6 is an enlarged view of a main portion of a second core sheet 130a in the laminated core 110. In the second embodiment shown below, differences from the first embodiment will be mainly described, and components having functions similar to those of the first embodiment will be denoted by the same reference numerals and description thereof will be omitted.

The laminated core 110 includes a plurality of first core sheet layers 120, a plurality of second core sheet layers 130, the adhesive materials 40, and the welded portions 50.

Each of the first core sheet layers 120 has a single first core sheet 120a. Alternatively, each of the first core sheet layers 120 may have a plurality of first core sheets 120a. In other words, each of the first core sheet layers 120 has the first core sheet 120a. Each of the first core sheet layers 120 has a configuration similar to that of the second core sheet layer 30 in the first embodiment.

Each of the first core sheets 120a is a thin plate formed of an electromagnetic steel sheet formed into a substantially circular shape. Each of the first core sheets 120a has the first annular portion 21 serving as the annular portion, the first extended portions 22 each serving as the extended portion, the first teeth portions 24 each serving as the teeth portion, and offset portions 125.

The offset portions 125 are portions that overlap with notch portions 136 provided in the second core sheet 130a, which will be described later, when the first core sheet layers 120 and the second core sheet layers 130 are alternately laminated. The offset portions 125 are parts of the first extended portion 22. Each of the first core sheets 120a is formed such that the first annular portion 21, the first extended portion 22, and the first teeth portion 24 are arranged in this order from the outer side in the radial direction. Note that the first extended portion 22 includes the offset portions 125.

Each of the second core sheet layers 130 has a single second core sheet 130a. Alternatively, each of the second core sheet layers 130 may have a plurality of second core sheets 130a. In other words, each of the second core sheet layers 130 has a single second core sheet 30a or the plurality of second core sheets 30a.

As shown in FIG. 3, each of the second core sheets 130a is a thin plate formed of an electromagnetic steel sheet formed into a substantially circular shape. Each of the second core sheets 130a has the second annular portion 31 serving as the annular portion, the second extended portion 132 serving as the extended portion, the second teeth portion 34 serving as the teeth portion, and the notch portions 136.

The notch portions 136 are notches formed in the second extended portion 132 from both sides in the circumferential direction. Each of the notch portion 136 has a smaller radial length than a second remaining portion 133 of the second extended portion 132. The notch portions 136 are provided at positions where the distance to the second teeth portion 34 is shorter than the distance to the second annular portion 31. In other words, the notch portions 136 are provided on the inner circumferential side with respect to the center of the second extended portion 132 in the radial direction. Here, the notch portions 136 are formed on the inner circumferential side in the radial direction with respect to the second remaining portion 133. In other words, the notch portions 136 are provided side by side with the second teeth portion 34 in the radial direction.

In this way, each of the second core sheets 130a is formed such that the second annular portion 31, the second remaining portion 133, the notch portions 136, and the second teeth portion 34 are arranged in this order from the outer side in the radial direction. Note that the second extended portion 132 is formed by combining the second remaining portion 133 and the notch portions 136.

The second core sheet layers 130 are alternately laminated with the first core sheet layers 120. At this time, because the notch portions 136 are formed in the second core sheet layers 130, the offset portions 125 provided in the first core sheets 120a do not overlap with the second core sheet layers 130 in the axial direction.

In a state in which the first core sheet layers 120 and the second core sheet layers 130 are alternately laminated, the first core sheet layers 120 respectively having the offset portions 125 face each other in the axial direction with the second core sheet layers 130 interposed therebetween.

However, the offset portions 125 do not have a portion that overlaps with the notch portions 136 of the second core sheet layers 130 in the axial direction. Therefore, the gaps are formed between the offset portions 125 and the notch portions 136 of the second core sheet layers 130.

The first core sheet layers 120 and the second core sheet layers 130 are adhered by the adhesive materials 40. Specifically, the adhesive materials 40 are respectively applied to the gaps formed between the offset portions 125 and the notch portions 136 of the second core sheet layers 130 (see FIG. 4). By applying the adhesive materials 40 to the gaps formed by the offset portions 125, the offset portions 125 facing each other in the axial direction are adhered to each other. In addition, the adhesive materials 40 further adhere to surfaces of the notch portions 136 of the second core sheet layers 130 on the cross direction side that intersects with the axial direction.

When compared with the comparative example shown in FIG. 5, in the laminated core 110 according to this embodiment, the first core sheet layers 120 respectively having the offset portions 125 and the second core sheet layers 130, with which the offset portions 125 do not overlap in the axial direction, are alternately laminated, and the offset portions 125 of the first core sheet layers 120 are adhered with each other by the adhesive materials 40. Accordingly, because the offset portions 125 of the first core sheet layers 120 that are alternately laminated with the second core sheet layers 130 are adhered with each other by the adhesive materials 40, it is possible to increase the area adhered by the adhesive materials 40. Therefore, it is possible to improve the bonding strength of the laminated core 110.

In addition, the offset portions 125 are provided on the inner circumferential side in the radial direction with respect to the first remaining portion 23. With such a configuration, the adhesive materials 40 can bond the laminated core 110 at the further radially inward side. Thus, it is possible to suppress the inner circumferential side in the radial direction of the laminated core 110 from being peeled off. Therefore, it is possible to prevent the peeling from occurring on the inner circumferential side in the radial direction of the laminated core 110 and insert-ability of the wound wire from being deteriorated.

In addition, because the offset portions 125 are formed by the notch portions 136 formed in the second core sheet layer 130, the shape of the laminated core 110 does not change even when the first core sheet layers 120 and the second core sheet layers 130 are laminated. Therefore, it is possible to easily wind the wound wire around the first extended portions 22 and the second extended portions 132 of the laminated core 110.

The configuration and operational advantages of the embodiment described above will be collectively described.

(1) (9) In the stator 1 having the laminated core 10, 110, the laminated core 10, 110 includes: the plurality of first core sheet layers 20, 120; the plurality of second core sheet layers 30, 130 provided so as to be alternately laminated with the first core sheet layers 20, 120; and the adhesive material 40 for adhering the first core sheet layers 20, 120 and the second core sheet layers 30, 130, each of the plurality of first core sheet layers 20, 120 has the offset portions 25, 125, the offset portions 25, 125 being configured so as not to overlap with the second core sheet layers 30, 130 in the axial direction, and the adhesive material 40 adheres the offset portions 25, 125 facing each other in the axial direction.

(6) In addition, the first core sheet layers 20, 120 each have a single first core sheet 20a, 120a or a plurality of first core sheets 20a, 120a, and the second core sheet layers 30, 130 each have a single second core sheet 30a, 130a or a plurality of second core sheets 30a, 130a.

According to these configurations, because the offset portions 25, 125 of the first core sheet layers 20, 120 that are alternately laminated with the second core sheet layers 30, 130 are adhered with each other by the adhesive material 40, it is possible to increase the area adhered by the adhesive material 40. Therefore, it is possible to improve the bonding strength of the laminated core 10, 110.

(2) The adhesive material 40 further adheres surfaces of the second core sheet layers 30, 130 on the cross direction side intersecting with the axial direction.

According to this configuration, because the offset portions 25, 125 of the first core sheet layers 20, 120 that are alternately laminated with the second core sheet layers 30, 130 and the surfaces of the second core sheet layers 30, 130 on the cross direction side intersecting with the axial direction are adhered by the adhesive material 40, it is possible to increase the area adhered by the adhesive material 40. Therefore, it is possible to improve the bonding strength of the laminated core 10.

(3) The first core sheet layers 20, 120 and the second core sheet layers 30, 130 each have: the first annular portion 21/the second annular portion 31; the first extended portions 22/the second extended portion 32, 132 extending from the first annular portion 21/the second annular portion 31 toward the inner circumference; and the first teeth portions 24/the second teeth portion 34 located on the inner circumference of the first extended portions 22/the second extended portion 32, 132. The offset portion 25, 125 is provided in the first extended portion 22, the offset portions 25, 125 having the smaller radial length than the first remaining portion 23 of the first extended portion 22 where the offset portion 25, 125 is not provided.

According to this configuration, because the offset portion 25, 125 is provided so as to be shorter in the radial direction, it is possible to increase the area of the first remaining portion 23 of the first extended portion 22 as compared with a case in which the offset portion 25, 125 is provided over the entire length of the first extended portion 22. Therefore, it is possible to improve the bonding strength of the laminated core 10, 110 without reducing an area of the electromagnetic steel sheet of the laminated core 10, 110.

(4) The offset portion 25, 125 is provided at the position where the distance to the first teeth portion 24 is shorter than the distance to the first annular portion 21.

According to this configuration, because the offset portion 25, 125 is provided at a position where the distance to the first teeth portion 24 is shorter than the distance to the first annular portion 21, the adhesive material 40 can bond the laminated core 10, 110 at the further radially inward side. Therefore, it is possible to suppress the inner side of the laminated core 10, 110 in the radial direction from being peeled off.

(5) The offset portion 25, 125 is provided on the inner circumference side with respect to the first remaining portions 23.

According to this configuration, because the offset portion 25, 125 is provided on the inner circumferential side with respect to the first remaining portion 23, the adhesive material 40 can bond the laminated core 10, 110 at the further radially inward side. Therefore, it is possible to suppress the inner side of the laminated core 10, 110 in the radial direction from being peeled off. Therefore, it is possible to prevent the peeling from occurring on the inner circumferential side in the radial direction of the laminated core 10, 110 and the insert-ability of the wound wire from being deteriorated.

(7) The offset portion 25 is a protrusion portion provided in the first core sheet layers 20.

According to this configuration, it is possible to improve the bonding strength of the laminated core 10 without reducing the area of the electromagnetic steel sheet of the laminated core 10. In addition, because the offset portions 25 project from the first extended portion 22 to both sides in the circumferential direction, it is possible to increase the area of the electromagnetic steel sheet in the laminated core 10 and generate stronger magnetic force.

(8) The offset portion 125 is a portion overlapping with the notch portions 136 provided in the second core sheet layers 130.

According to this configuration, because the offset portions 125 are formed by the notch portions 136 formed in the second core sheet layers 130, the shape of the laminated core 10 does not change even when the first core sheet layers 120 and the second core sheet layers 130 are laminated. Therefore, it is possible to easily wind the wound wire around the first extended portions 22 and the second extended portions 132 of the laminated core 10.

Although the embodiment of the present invention has been described above, the above embodiment is merely a part of application examples of the present invention, and is not intended to limit the technical scope of the present invention to the specific configurations of the above embodiment.

### DESCRIPTION OF REFERENCE SIGNS

100: motor
1: stator (motor stator)
2: rotor
10: laminated core
20: first core sheet layer
20a: first core sheet
21: first annular portion (annular portion)
22: first extended portion (extended portion)
23: first remaining portion (remaining portion)
24: first teeth portion (teeth portion)
25: offset portion
30: second core sheet layer
30a: second core sheet
31: second annular portion (annular portion)
32: second extended portion (extended portion)
34: second teeth portion (teeth portion)
40: adhesive material
120: first core sheet layer
120a: first core sheet
125: offset portion
130: second core sheet layer
130a: second core sheet
132: second extended portion (extended portion)
133: second remaining portion (remaining portion)

## Claims

1. A motor stator comprising a laminated core, wherein
the laminated core comprises:
a plurality of first core sheet layers;
a plurality of second core sheet layers provided so as to be alternately laminated with the first core sheet layers;
an adhesive material for adhering the first core sheet layers and the second core sheet layers,
each of the plurality of first core sheet layers has an offset portion, the offset portion being configured so as not to overlap with the second core sheet layers in an axial direction, and
the adhesive material adheres the offset portions facing each other in the axial direction.

2. The motor stator according to claim 1, wherein
the adhesive material further adheres surfaces of the second core sheet layers on a cross direction side intersecting with the axial direction.

3. The motor stator according to claim 1, wherein
the first core sheet layers and the second core sheet layers each have:
an annular portion;
an extended portion extending from the annular portion toward an inner circumference; and
a teeth portion located on an inner circumference of the extended portion, and
the offset portion is provided in the extended portion, the offset portion having a smaller radial length than a remaining portion of the extended portion where the offset portion is not provided.

4. The motor stator according to claim 3, wherein
the offset portion is provided at a position where a distance to the teeth portion is shorter than a distance to the annular portion.

5. The motor stator according to claim 3, wherein
the offset portion is provided on an inner circumferential side with respect to the remaining portion.

6. The motor stator according to claim 1, wherein
the first core sheet layers each have a single first core sheet or a plurality of first core sheets, and
the second core sheet layers each have a single second core sheet or a plurality of second core sheets.

7. The motor stator according to any one of claims 1 to 6, wherein
the offset portion is constituted by a protrusion portion provided in the first core sheet layers.

8. The motor stator according to any one of claims 1 to 6, wherein
the offset portion is a portion overlapping with notch portions provided in the second core sheet layers.

9. A motor comprising the motor stator according to claim 1.
